# EUROPÄISCHE PATENTANMELDUNG

(11) **EP 1 902 892 A1**
(43) Veröffentlichungstag der Anmeldung: **26.03.2008**
(21) Anmeldenummer: 06021278.4
(22) Anmeldetag: 10.10.2006
(51) Int. Cl.: B60K 17/36, B60K 17/04

(54) **Antriebsvorrichtung für Tandemachsen und Verfahren zum Antrieb von Tandemachsen**

(30) Priorität: 22.09.2006 EP 06019897
(71) Anmelder: NAF Neunkirchener Achsenfabrik AG, 91077 Neunkirchen (DE)
(72) Erfinder: Schnabel, Bernhard, 82319 Starnberg (DE)
(74) Vertreter: Hofstetter, Alfons J.

(57) **Zusammenfassung**

Die vorliegende Erfindung betrifft eine Antriebsvorrichtung für Tandemachsen eines Fahrzeuges oder einer selbstfahrenden Arbeitsmaschine, die einen fest an einem Fahrzeugrahmen oder Rahmen der Arbeitsmaschine angeordneten Achsträger (12) und einen drehbar am Achsträger (12) gelagerten Tandemkasten (14) umfasst, sowie mit mindestens einer Antriebswelle (16), wobei das Antriebsmoment der Antriebswelle (16) über ein Doppelplanetengetriebe (18) bestehen aus einem ersten antriebsseitigen Planetengetriebe (20) mit einem ersten Sonnenrad (24) und ersten Planetenrädern (26) und einem abtriebsseitigen Planetengetriebe (22) mit einem zweiten Sonnenrad (28) und zweiten Planetenrädern (30) auf eine Welle (44) eines Tandemachsenantriebs (32) übertragen wird und die ersten und zweiten Planetenräder (26, 30) über jeweils eine Planetenwelle (34) miteinander verbunden sind, wobei die ersten Planetenräder (26) gegen einen ersten, mit dem Achsträger (12) verbundenen Zahnkranz (36) und die zweiten Planetenräder gegen einen zweiten, im Tandemkasten (14) angeordneten Zahnkranz (38) abgestützt sind. Erfindungsgemäß ist eine Schaltmuffe (40) auf der Antriebswelle (16) oder der Welle (44) axial verschiebbar ausgebildet ist, derart, dass die Schaltmuffe (40) in einer ersten Schaltstellung (EIN) der Antriebsvorrichtung (10) mit dem ersten oder dem zweiten Sonnenrad (26, 28) verbunden ist und in einer zweiten Schaltstellung (AUS) von dem ersten oder zweiten Sonnenrad (26, 28) gelöst ist und mit der Welle (44) oder der Antriebswelle (16) in Wirkverbindung steht. Die Erfindung betrifft weiterhin ein Verfahren zum Antrieb von Tandemachsen eines Fahrzeuges oder einer selbstfahrenden Arbeitsmaschine.

## Beschreibung

Die vorliegende Erfindung betrifft eine Antriebsvorrichtung für Tandemachsen eines Fahrzeuges oder einer selbstfahrenden Arbeitsmaschine, die einen fest an einem Fahrzeugrahmen oder Rahmen der Arbeitsmaschine angeordneten Achsträger und einen drehbar am Achsträger gelagerten Tandemkasten umfasst, sowie mit mindestens einer Antriebswelle, wobei das Antriebsmoment der Antriebswelle über ein Doppelplanetengetriebe bestehen aus einem ersten antriebsseitigen Planetengetriebe mit einem ersten Sonnenrad und ersten Planetenrädern und einem abtriebsseitigen Planetengetriebe mit einem zweiten Sonnenrad und zweiten Planetenrädern auf einen Tandemachsenantrieb übertragen wird und die ersten und zweiten Planetenräder über jeweils eine Planetenwelle miteinander verbunden sind, wobei die ersten Planetenräder gegen einen ersten, mit dem Achsträger verbundenen Zahnkranz und die zweiten Planetenräder gegen einen zweiten, im Tandemkasten angeordneten Zahnkranz abgestützt sind. Die Erfindung betrifft weiterhin ein Verfahren zum Antrieb von Tandemachsen eines Fahrzeuges oder einer selbstfahrenden Arbeitsmaschine.

Tandemachsen oder auch Boogieachsen haben den Nachteil, dass sich die Achsenschwinge abhängig von Übersetzungsverhältnissen und den geometrischen Verhältnissen mehr oder weniger aufrichtet, wenn ein Drehmoment eingeleitet wird. Dadurch ergibt sich eine ungleichmäßige Verteilung der Radlast zwischen den Vorder- und Hinterrädern, die an den jeweiligen Enden der Achsschwingen angeordnet sind. Daher kommt es vor, dass zumindest eines der Räder die Bodenhaftung verliert bzw. der Bodendruck stark reduziert wird. Da die beschriebenen Tandemachsen hauptsächlich in Forstmaschinen, Muldenkippern und Gradern zum Einsatz kommen, die insbesondere in unwegsamem Gelände operieren, führt dies zu deutlichen Einschränkungen während des Betriebs der entsprechenden Fahrzeuge und zu unterschiedlichem Reifenverschleiß.

Um den genannten Aufstelleffekt zu verhindern, wird bei bekannten Vorrichtungen in der Achsschwinge eine Übersetzung von 1:1 oder von nahezu 1:1 verwendet. Nachteilig hierbei ist jedoch, dass die Komponenten innerhalb der Achsschwinge ein hohes Drehmoment übertragen müssen und daher entsprechend großzügig dimensioniert werden. Derartige Achsschwingen werden daher sehr teuer, schwer und verlieren an Bodenfreiheit. Weitere bekannte Vorrichtungen zur Verhinderung eines Aufstelleffekts einer Tandemachse verwenden ein Doppelplanetengetriebe oder ein Messgetriebe und nutzen dessen Rückdrehmoment um den Aufstelleffekt zu reduzieren. Entsprechende Vorrichtungen sind der DE-A1-19802371 und in der DE-A1-4120801 beschrieben. Das Rückdrehmoment ist dabei immer proportional zum Eingangsmoment ist. Dadurch lässt sich aber ein Aufstelleffekt, der in manchen Fahrsituationen auch wünschenswert sein kann, nicht herbeiführen. Das Vorder- bzw. Hinterrad der Tandemachse lässt sich durch diesen Mechanismus nicht gewollt anheben.

Eine weitere aus dem Stand der Technik bekannte Vorrichtung ist in der DE-A1-19616405 beschrieben. Diese Vorrichtung verwendet Hydraulikzylinder, die außen zwischen einem Tandemkasten und dem Fahrzeugrahmen angebracht werden und mit einem Druck beaufschlagt werden, der proportional zum Betriebsdruck eines antreibenden Hydromotors geschaltet wird. Nachteilig hierbei ist jedoch, dass die außenliegenden Hydraulikzylinder anfällig sind, da sie den Umwelteinflüssen ausgesetzt sind. Zudem ist die Installation zwischen Fahrzeugrahmen und Tandemschwinge aufwendig und schränkt die unabhängige Bewegungsfreiheit der Tandemachse ein. Eine unterschiedliche Steuerung der linken und rechten Seite ist nicht möglich.

Schließlich beschreibt die DE-U1-20217910 eine Vorrichtung zur Regulierung des Aufstellens einer Tandemachse, wobei ein Gehäuse eines mit Druck beaufschlagbaren Drehkolbenzylinders fest mit einem Achsgehäuse einer Antriebswelle verbunden ist und ein beweglicher Kolben des Drehkolbenzylinders ein nachgeschaltetes Planetengetriebe mit einer Planetenachse und Planetenrädern antreibt, wobei die Planetenachse des Planetengetriebes fest mit dem Achsgehäuse oder dem Gehäuse des Drehkolbenzylinders verbunden ist und die Planetenräder auf einen Zahnkranz, der mit einem Tandemachsengehäuse verbunden ist, einwirken. Durch die Zwischenschaltung eines Drehkolbenzylinders und des dem Drehkolbenzylinder nachgeschalteten Planetengetriebes ist es möglich, einen vordefinierten Druck auf das Tandemachsengehäuse auszuüben und entweder einem Aufstelleffekt der Tandemachse entgegenzuwirken oder ein aktives Anheben der Tandemachse durchzuführen. Dabei wird die Drehrichtung des Drehkolbens bei Druckeinleitung durch das Planetengetriebe umgekehrt, so dass auf das Tandemachsengehäuse entsprechende Gegenmomente wirken.

Nachteilig an den genannten Antriebsvorrichtungen ist jedoch, dass diese entweder dauerhaft das Aufstellen einer Tandemachse ohne die Möglichkeit eines gewollten Ausnutzens des Aufstelleffektes oder einer entsprechenden Antriebsleistung verhindern oder konstruktiv aufwendig und in der Herstellung und Wartung teuer sind.

Es ist daher Aufgabe der vorliegenden Erfindung, eine Antriebsvorrichtung für Tandemachsen und ein Verfahren zum Antrieb von Tandemachsen eines Fahrzeuges oder einer selbstfahrenden Arbeitsmaschine bereitzustellen, die zuverlässig die Möglichkeit eines gewollten Ausnutzens des Aufstelleffektes oder einer entsprechenden Antriebsleistung bereitstellt, das ungewollte Aufstellen der Tandemachse in einem vorbestimmbaren Maße verhindern und zudem konstruktiv relativ einfach und kostengünstig auszuführen sind.

Gelöst wird diese Aufgabe durch eine Antriebsvorrichtung für Tandemachsen und ein Verfahren zum Antrieb von Tandemachsen eines Fahrzeuges oder einer selbstfahrenden Arbeitsmaschine mit den Merkmalen der unabhängigen Ansprüche 1 und 13.

Vorteilhafte Ausgestaltungen sind in den jeweiligen Unteransprüchen beschrieben.

Bei einer erfindungsgemäßen Antriebsvorrichtung für Tandemachsen eines Fahrzeuges oder einer selbstfahrenden Arbeitsmaschine sind ein fest an einem Fahrzeugrahmen oder Rahmen der Arbeitsmaschine angeordneter Achsträger sowie ein drehbar am Achsträger gelagerter Tandemkasten ausgebildet. Des Weiteren weist die Antriebsvorrichtung mindestens eine Antriebswelle auf, wobei das Antriebsmoment der Antriebswelle über ein Doppelplanetengetriebe bestehend aus einem ersten antriebsseitigen Planetengetriebe mit einem ersten Sonnenrad und ersten Planetenrädern und einem abtriebsseitigen Planetengetriebe mit einem zweiten Sonnenrad und zweiten Planetenrädern auf einen Tandemachsenantrieb übertragen wird. Dabei sind die ersten und zweiten Planetenräder jeweils über eine Planetenwelle miteinander verbunden, wobei die ersten Planetenräder gegen einen ersten, mit dem Achsträger verbundenen Zahnkranz und die zweiten Planetenräder gegen einen zweiten, im Tandemkasten angeordneten Zahnkranz abgestützt sind. Erfindungsgemäß ist auf der Antriebswelle eine Schaltmuffe axial verschiebbar ausgebildet ist, derart, dass die Schaltmuffe in einer ersten Schaltstellung (EIN) der Antriebsvorrichtung mit dem ersten Sonnenrad verbunden ist und in einer zweiten Schaltstellung (AUS) von dem ersten Sonnenrad gelöst ist und mit einer abtriebsseitigen Welle in Wirkverbindung steht. Es ist aber auch möglich, dass die Schaltmuffe auf der Welle axial verschiebbar ausgebildet ist, derart, dass die Schaltmuffe in der ersten Schaltstellung (EIN) der Antriebsvorrichtung (10) mit dem zweiten Sonnenrad verbunden ist und in der zweiten Schaltstellung (AUS) von dem zweiten Sonnenrad gelöst ist und mit der Antriebswelle in Wirkverbindung steht. Vorteilhafterweise stützen sich die Reaktionskräfte des Doppelplanetengetriebes an dem ersten und zweiten Zahnkranz ab und erzeugen somit ein Drehmoment am Tandemkasten, welches - proportional zum Eingangsmoment - dem Aufrichten des Tandemkastens durch die Radkräfte entgegenwirkt. Dieser Leistungsfluss über die beiden Zahnkränze findet in der Schaltstellung (EIN) statt. In der Schaltstellung (AUS) läuft das Drehmoment direkt von der Antriebswelle über die Schaltmuffe zur abtriebsseitigen Welle. Das Doppelplanetengetriebe läuft über die ersten und zweiten Planetenräder entsprechend der Übersetzungsverhältnisse leer mit, der Tandemkasten kann in der zweiten Schaltstellung (AUS) frei schwingen, da er drehbar am Achsträger bzw. am Fahrzeugrahmen angeordnet ist und das erste beziehungsweise das zweite Sonnenrad drehbar an der Schaltmuffe gelagert ist.

Die erfindungsgemäßen Lösungen gewährleisten zum einen zuverlässig die Möglichkeit eines gewollten Ausnutzens des Aufstelleffekts oder eine entsprechende Antriebsleistung durch die zweite Schaltstellung (AUS), des Weiteren wird das ungewollte Aufstellen der Tandemachse in der ersten Schaltstellung (EIN) verhindert und sind zudem konstruktiv relativ einfach und kostengünstig auszuführen.

In einer vorteilhaften Ausgestaltung der erfindungsgemäßen Antriebsvorrichtung ist die Schaltmuffe in einer Verzahnung der Antriebswelle oder der Welle gelagert. Dadurch ist eine sichere und exakte Lagerung der Schaltmuffe an der Antriebswelle oder abtriebsseitigen Welle gewährleistet.

In einer weiteren vorteilhaften Ausgestaltung der Erfindung ist zum Verbinden der Schaltmuffe mit dem ersten oder zweiten Sonnenrad in der ersten Schaltstellung (EIN) oder zum Verbinden der Schaltmuffe mit der Welle oder Antriebswelle in der zweiten Schaltstellung (AUS) eine form-, kraft- oder reibschlüssige Verbindung ausgebildet. Diese kann zum Beispiel mittels einer Bolzenverbindung, einer Verzahnung oder über Reiblamellen erfolgen.

In einer weiteren vorteilhaften Ausgestaltung der Erfindung ist die Schaltmuffe derart axial verschiebbar ausgebildet, dass sie mindestens eine dritte Schaltstellung (LEERLAUF), die zwischen der ersten Schaltstellung (EIN) und der zweiten Schaltstellung (AUS) liegt, einnehmen kann. Dadurch kann erfindungsgemäß ein lastfreier Wechsel zwischen ersten Schaltstellung (EIN) und der zweiten Schaltstellung (AUS) erleichtert werden.

In einer weiteren vorteilhaften Ausgestaltung der Erfindung umfasst die Welle des Tandemachsenantriebs ein Stirnrad, wobei das Stirnrad zugleich das zweite Sonnenrad des abtriebsseitigen Planetengetriebes ausbildet. Dadurch ist gewährleistet, dass die notwendige Baugröße relativ kleingehalten werden kann.

In einer weiteren vorteilhaften Ausgestaltung der erfindungsgemäßen Antriebsvorrichtung weist die Antriebsvorrichtung im Bereich des ersten oder des zweiten Sonnenrads axiale Anschläge auf. Dadurch ist sichergestellt, dass sich das erste oder zweite Sonnenrad nicht ungewollt ein- oder auskuppelt und es zu einer nicht gewollten Änderung der Schaltstellung kommt.

In einer weiteren vorteilhaften Ausgestaltung der erfindungsgemäßen Antriebsvorrichtung weist diese eine Betätigungseinheit zum axialen Verschieben der Schaltmuffe von der ersten Schaltstellung (EIN) in die zweite Schaltstellung (AUS) oder umgekehrt auf. Die Betätigungseinheit kann dabei mechanisch, hydraulisch und/oder elektrisch ausgebildet sein. Die Betätigungseinheit ist dabei vorteilhafterweise mit dem Führerhaus des Fahrzeuges oder der selbstfahrenden Arbeitsmaschine verbunden, so dass die Umschaltung von der ersten in die zweite Schaltstellung jederzeit durchgeführt werden kann.

Ein erfindungsgemäßes Verfahren zum Antrieb von Tandemachsen eines Fahrzeuges oder einer selbstfahrenden Arbeitsmaschine umfasst folgende Schritte: (a) Einleiten eines Antriebsmoments über eine Antriebswelle und über ein Doppelplanetengetriebe bestehen aus einem ersten antriebsseitigen Planetengetriebe mit einem ersten Sonnenrad und ersten Planetenrädern und einem abtriebsseitigen Planetengetriebe mit einem zweiten Sonnenrad und zweiten Planetenrädern auf eine Welle eines Tandemachsenantriebs, wobei die ersten und zweiten Planetenräder über jeweils eine Planetenwelle miteinander verbunden sind und die ersten Planetenräder gegen einen ersten, mit dem Achsträger verbundenen Zahnkranz und die zweiten Planetenräder gegen einen zweiten, im Tandemkasten angeordneten Zahnkranz abgestützt sind; und (b) Betätigung einer Betätigungsvorrichtung zum axialen Verschieben einer Schaltmuffe von einer ersten Schaltstellung (EIN) in eine zweite Schaltstellung (AUS) oder umgekehrt, wobei die Schaltmuffe auf der Antriebswelle oder der Welle axial verschiebbar ausgebildet ist, derart, dass die Schaltmuffe in einer ersten Schaltstellung (EIN) der Antriebsvorrichtung mit dem ersten oder dem zweiten Sonnenrad verbunden ist und in einer zweiten Schaltstellung (AUS) von dem ersten oder zweiten Sonnenrad gelöst ist und mit der Welle oder der Antriebswelle in Wirkverbindung steht. Durch das erfindungsgemäße Verfahren ist gewährleistet, dass dem Benutzer des Fahrzeuges oder der selbstfahrenden Arbeitsmaschine zwei Schaltstellungen, nämlich eine erste Schaltstellung (EIN) und eine zweite Schaltstellung (AUS) zur Verfügung stehen. In der Schaltstellung (EIN) erfolgt ein Leistungsfluss über den ersten und zweiten Zahnkranz, so dass ein Drehmoment am Tandemkasten erzeugt wird, welches - proportional zum Eingangsmoment - dem Aufrichten des Tandemkastens durch die Radkräfte entgegenwirkt. In der Schaltstellung (AUS) ist der Tandemkasten mit dem Achsträger bzw. dem Fahrzeugrahmen verbunden und kann sich frei drehen. Der Planetentrieb läuft entsprechend der Übersetzungsverhältnisse leer mit. Das Drehmoment läuft direkt von der Antriebswelle über die Schaltmuffe zur abtriebsseitigen Welle. Mit den genannten Schaltstellungen ist es möglich, einerseits das ungewohnte Aufstellen der Tandemachse zu verhindern und andererseits ein gewolltes Ausnutzen des Aufstelleffekts oder einer entsprechenden Antriebsleistung bereitzustellen.

In einer vorteilhaften Ausgestaltung des erfindungsgemäßen Verfahrens wird zur Durchführung des Verfahrens eine Antriebsvorrichtung eines Fahrzeuges oder einer selbstfahrenden Arbeitsmaschine wie im Vorstehenden beschrieben verwendet.

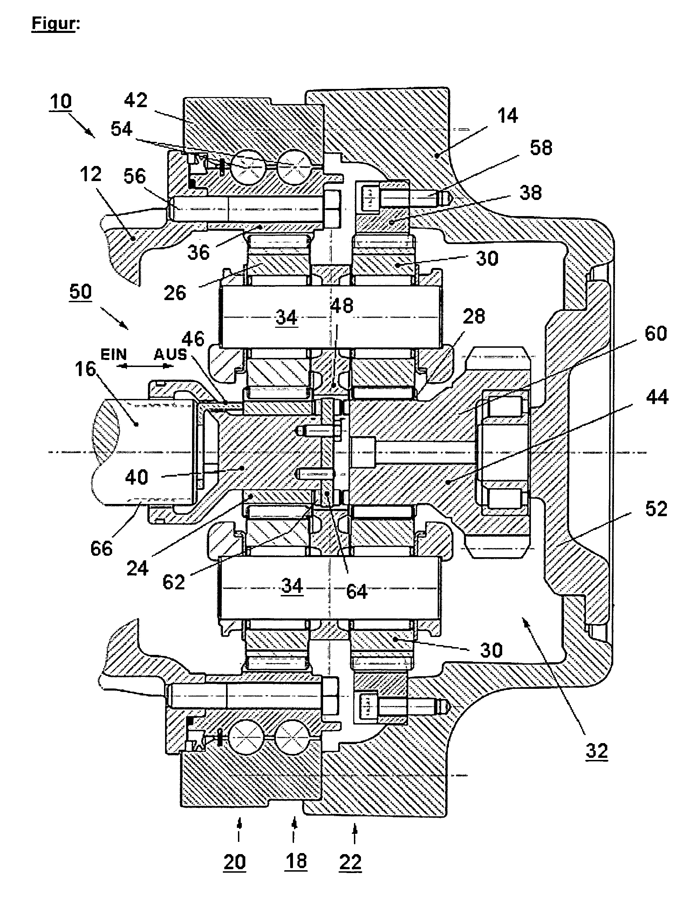

Weitere Einzelheiten, Merkmale und Vorteile der Erfindung ergeben sich aus der nachfolgenden Beschreibung eines in der Figur schematisch dargestellten Ausführungsbeispiels.

Die Figur zeigt eine Schnittansicht einer Ausführungsform der Antriebsvorrichtung 10 für eine Tandemachse eines Fahrzeuges oder einer selbstfahrenden Arbeitsmaschine. Das Fahrzeug weist dabei einen Fahrzeugrahmen (nicht dargestellt) auf, an dem ein Achsträger 12 angeordnet ist. Am Achsträger 12 ist ein Tandemkasten 14 über einen Kugeldrehkranz 42 und einem entsprechenden Kugellager 54 drehbar gelagert. Man erkennt, dass die Antriebsvorrichtung 10 eine Antriebswelle 16 aufweist, wobei das Antriebsmoment der Antriebswelle 16 über ein Doppelplanetengetriebe 18 auf einen Tandemachsenantrieb 32 übertragen wird. Das Doppelplanetengetriebe 18 besteht dabei aus einem ersten antriebsseitigen Planetengetriebe 20 mit einem ersten, an der Antriebswelle 16 angeordneten Sonnenrad 24 und entsprechenden ersten Planetenrädern 26 sowie einem abtriebsseitigen Planetengetriebe 22 mit einem zweiten, an einem Stirnrad 60 einer Welle 44 des Tandemachsenantriebs 32 ausgebildeten Sonnenrad 28 und entsprechenden zweiten Planetenrädern 30. In dem dargestellten Ausführungsbeispiel bildet das Stirnrad 60 zugleich das zweite Sonnenrad 28 des abtriebsseitigen Planetengetriebes 22 aus. Über das Stirnrad 60, als Teil des Tandemachsenantriebs 32, erfolgt eine Kraftübertragung auf die entsprechenden Räder der Tandemachse (nicht dargestellt). Der Tandemachsenantrieb 32 kann dabei ein Zahnradantrieb, ein Ketten- oder Bandantrieb sein. Des Weiteren erkennt man, dass das Stirnrad 60 in dem Tandemachsengehäuse 14 mittels einer Lagerung 52 gelagert ist. Entsprechende Befestigungsvorrichtungen verbinden das Lager 52 fest mit dem Tandemkasten 14. Zudem erkennt man, dass die Antriebswelle 16 mit der Welle 44, dem zweiten Sonnenrad 28 und dem Stirnrad 60 koaxial ausgebildet ist.

Die ersten und zweiten Planetenräder 26, 30 sind jeweils über eine Planetenwelle 34 miteinander verbunden, wobei die ersten Planetenräder 26 gegen einen ersten, mit dem Achsträger 12 verbundenen Zahnkranz 36 und die zweiten Planetenräder 30 gegen einen zweiten, im Tandemkasten 14 angeordneten Zahnkranz 38 abgestützt sind. Die Zahnkränze 36, 38 sind dabei als Hohlräder mit Innenverzahnung ausgebildet. Aus der Figur wird deutlich, dass auf der Antriebswelle 16 eine Schaltmuffe 40 axial verschiebbar ausgebildet ist, derart, dass die Schaltmuffe 40 in einer ersten Schaltstellung (EIN) der Antriebsvorrichtung 10 mit dem ersten Sonnenrad 24 verbunden ist und in einer zweiten Schaltstellung (AUS) von dem ersten Sonnenrad 24 gelöst ist und mit der Welle 44 in Wirkverbindung steht. In einem weiteren, nicht dargestellten Ausführungsbeispiel ist die Schaltmuffe 40 auf der Welle 44 axial verschiebbar ausgebildet, derart, dass die Schaltmuffe 40 in einer ersten Schaltstellung (EIN) der Antriebsvorrichtung 10 mit dem zweiten Sonnenrad 28 verbunden ist und in einer zweiten Schaltstellung (AUS) von dem zweiten Sonnenrad 28 gelöst ist und mit der Antriebswelle 16 in Wirkverbindung steht. Die Schaltmuffe 40 ist dabei in einer Verzahnung 66 der Antriebswelle 16 oder der abtriebsseitigen Welle 44 (nicht dargestellt) gelagert.

Zum Verbinden der Schaltmuffe 40 dem ersten oder zweiten Sonnenrad 24, 28 in der ersten Schaltstellung (EIN) oder zum Verbinden der Schaltmuffe 40 mit der Welle 44 oder Antriebswelle 16 in der zweiten Schaltstellung (AUS) ist eine form-, kraft- oder reibschlüssige Verbindung ausgebildet. In dem dargestellten Ausführungsbeispiel erfolgt die Verbindung mittels einer an der Schaltmuffe 40 angeordneten Klauenverzahnung 64 mit Zähnen 62. Aber auch andere Verbindungsmöglichkeiten wie zum Beispiel die Verbindung über Reiblamellen sind möglich.

Der so genannte Aufricht- oder Aufstelleffekt, welcher ungleichmäßige Aufstellkräfte an den Rädern der Tandemachse bewirkt, wird in der ersten Schaltstellung (EIN) dadurch verhindert, dass über den Zahnkranz 38 ein Drehmoment in den Tandemkasten 14 eingeleitet wird, welches dieser ungleichmäßigen Belastung der Räder entgegenwirkt. In der zweiten Schaltstellung (AUS) ist der Tandemkasten 14 ausschließlich über den Kugeldrehkranz 42 mit dem Achsträger 12 bzw. dem Fahrzeugrahmen verbunden und kann sich frei drehen. Auch andere technische Möglichkeiten der drehbaren Lagerung des Tandemkastens 14 sind denkbar. Der Planetentrieb läuft entsprechend der Übersetzungsverhältnisse leer mit. Das Drehmoment läuft direkt von der Antriebswelle 16 über die Schaltmuffe 40 zur abtriebsseitigen Welle 44.

Die Antriebsvorrichtung 10 weist im Bereich des ersten Sonnenrads 24 oder dem zweiten Sonnenrad 28 axiale Anschläge 46, 48 auf. Dadurch wird gewährleistet, dass das erste oder zweite Sonnenrad 24, 28 nicht ungewollt ein- oder auskuppelt und es zu einer nicht gewollten Änderung der Schaltstellung kommt.

Die Vorrichtung 10 weist zudem eine Betätigungseinheit 50 zum axialen Verschieben der Schaltmuffe 40 von der ersten Schaltstellung (EIN) in die zweite Schaltstellung (AUS) oder umgekehrt aus. Die Betätigungseinheit 50 kann dabei mechanisch, elektrisch und/oder hydraulisch ausgeführt sein. Auch weitere Betätigungsvarianten sind denkbar. Auf eine exakte Beschreibung der Betätigungseinheit 50 soll daher an dieser Stelle verzichtet werden.

Des Weiteren erkennt man aus der Figur, dass der erste Zahnkranz 36 mittels einer als Befestigungsbolzen oder Befestigungsschraube ausgebildeten Befestigungsvorrichtung 56 mit dem Achsträger 12 verbunden ist. Ebenfalls über eine als Befestigungsbolzen oder Befestigungsschraube ausgebildete weitere Befestigungsvorrichtung 58 ist der Kugeldrehkranz 42 mit dem Tandemkasten 14 fest verbunden.

## Patentansprüche

1. Antriebsvorrichtung für Tandemachsen eines Fahrzeuges oder einer selbstfahrenden Arbeitsmaschine, die einen fest an einem Fahrzeugrahmen oder Rahmen der Arbeitsmaschine angeordneten Achsträger (12) und einen drehbar am Achsträger (12) gelagerten Tandemkasten (14) umfasst, sowie mit mindestens einer Antriebswelle (16), wobei das Antriebsmoment der Antriebswelle (16) über ein Doppelplanetengetriebe (18) bestehen aus einem ersten antriebsseitigen Planetengetriebe (20) mit einem ersten Sonnenrad (24) und ersten Planetenrädern (26) und einem abtriebsseitigen Planetengetriebe (22) mit einem zweiten Sonnenrad (28) und zweiten Planetenrädern (30) auf eine Welle (44) eines Tandemachsenantriebs (32) übertragen wird und die ersten und zweiten Planetenräder (26, 30) über jeweils eine Planetenwelle (34) miteinander verbunden sind, wobei die ersten Planetenräder (26) gegen einen ersten, mit dem Achsträger (12) verbundenen Zahnkranz (36) und die zweiten Planetenräder (30) gegen einen zweiten, im Tandemkasten (14) angeordneten Zahnkranz (38) abgestützt sind,
**dadurch gekennzeichnet,**
**dass** auf der Antriebswelle (16) eine Schaltmuffe (40) axial verschiebbar ausgebildet ist, derart, dass die Schaltmuffe (40) in einer ersten Schaltstellung (EIN) der Antriebsvorrichtung (10) mit dem ersten Sonnenrad (24) verbunden ist und in einer zweiten Schaltstellung (AUS) von dem ersten Sonnenrad (24) gelöst ist und mit der Welle (44) in Wirkverbindung steht.

2. Antriebsvorrichtung für Tandemachsen eines Fahrzeuges oder einer selbstfahrenden Arbeitsmaschine, die einen fest an einem Fahrzeugrahmen oder Rahmen der Arbeitsmaschine angeordneten Achsträger (12) und einen drehbar am Achsträger (12) gelagerten Tandemkasten (14) umfasst, sowie mit mindestens einer Antriebswelle (16), wobei das Antriebsmoment der Antriebswelle (16) über ein Doppelplanetengetriebe (18) bestehen aus einem ersten antriebsseitigen Planetengetriebe (20) mit einem ersten Sonnenrad (24) und ersten Planetenrädern (26) und einem abtriebsseitigen Planetengetriebe (22) mit einem zweiten Sonnenrad (28) und zweiten Planetenrädern (30) auf eine Welle (44) eines Tandemachsenantriebs (32) übertragen wird und die ersten und zweiten Planetenräder (26, 30) über jeweils eine Planetenwelle (34) miteinander verbunden sind, wobei die ersten Planetenräder (26) gegen einen ersten, mit dem Achsträger (12) verbundenen Zahnkranz (36) und die zweiten Planetenräder (30) gegen einen zweiten, im Tandemkasten (14) angeordneten Zahnkranz (38) abgestützt sind,
**dadurch gekennzeichnet,**
**dass** auf der Welle (44) eine Schaltmuffe (40) axial verschiebbar ausgebildet ist, derart, dass die Schaltmuffe (40) in einer ersten Schaltstellung (EIN) der Antriebsvorrichtung (10) mit dem zweiten Sonnenrad (28) verbunden ist und in einer zweiten Schaltstellung (AUS) von dem zweiten Sonnenrad (28) gelöst ist und mit der Antriebswelle (16) in Wirkverbindung steht.

3. Antriebsvorrichtung nach Anspruch 1 oder 2,
**dadurch gekennzeichnet,**
**dass** die Schaltmuffe (40) in einer Verzahnung (66) der Antriebswelle (16) oder der Welle (44) gelagert ist.

4. Antriebsvorrichtung nach einem der vorhergehenden Ansprüche,
**dadurch gekennzeichnet,**
**dass** zum Verbinden der Schaltmuffe (40) mit dem ersten oder zweiten Sonnenrad (24, 28) in der ersten Schaltstellung (EIN) oder zum Verbinden der Schaltmuffe (40) mit der Welle (44) oder Antriebswelle (16) in der zweiten Schaltstellung (AUS) eine form-, kraft- oder reibschlüssige Verbindung ausgebildet ist.

5. Antriebsvorrichtung nach Anspruch 4,
**dadurch gekennzeichnet,**
**dass** die Verbindung der Schaltmuffe (40) mit dem ersten oder zweiten Sonnenrad (24, 28) in der ersten Schaltstellung (EIN) oder die Verbindung der Schaltmuffe (40) mit der Welle (44) oder Antriebswelle (16) in der zweiten Schaltstellung (AUS) mittels einer Bolzenverbindung, einer Verzahnung oder über Reiblamellen erfolgt.

6. Antriebsvorrichtung nach einem der vorhergehenden Ansprüche,
**dadurch gekennzeichnet,**
**dass** die Schaltmuffe (40) derart axial verschiebbar ausgebildet ist, dass sie mindestens eine dritte Schaltstellung (LEERLAUF), die zwischen der ersten Schaltstellung (EIN) und der zweiten Schaltstellung (AUS) liegt, einnehmen kann.

7. Antriebsvorrichtung nach einem der vorhergehenden Ansprüche,
**dadurch gekennzeichnet,**
**dass** der Tandemkasten (14) über einen Kugeldrehkranz (42) drehbar an dem Achsträger (12) gelagert ist.

8. Antriebsvorrichtung nach einem der vorhergehenden Ansprüche,
**dadurch gekennzeichnet,**
**dass** die Welle (44) des Tandemachsenantriebs (32) ein Stirnrad (60) umfasst, wobei das Stirnrad (60) zugleich das zweite Sonnenrad (28) des abtriebsseitigen Planetengetriebes (22) ausbildet.

9. Antriebsvorrichtung nach einem der vorhergehenden Ansprüche,
**dadurch gekennzeichnet,**
**dass** die Antriebsvorrichtung (10) im Bereich des ersten oder des zweiten Sonnenrads axiale Anschläge (46, 48) aufweist.

10. Antriebsvorrichtung nach einem der vorhergehenden Ansprüche,
**dadurch gekennzeichnet,**
**dass** die Antriebsvorrichtung (10) eine Betätigungseinheit (50) zum axialen Verschieben der Schaltmuffe (40) von der ersten Schaltstellung (EIN) in die zweite Schaltstellung (AUS) und umgekehrt aufweist.

11. Antriebsvorrichtung nach Anspruch 10,
**dadurch gekennzeichnet,**
**dass** die Betätigungseinheit (50) mechanisch, hydraulisch und/oder elektrisch ausgebildet ist.

12. Antriebsvorrichtung nach einem der vorhergehenden Ansprüche,
**dadurch gekennzeichnet,**
**dass** die Antriebswelle (16) mit dem zweiten Sonnenrad (28), der Welle (44) und dem Stirnrad (60) koaxial ausgebildet ist.

13. Antriebsvorrichtung nach einem der vorhergehenden Ansprüche,
**dadurch gekennzeichnet,**
**dass** der Tandemachsenantrieb (32) ein Zahnradantrieb, ein Ketten- oder Bandantrieb ist.

14. Verfahren zum Antrieb von Tandemachsen eines Fahrzeuges oder einer selbstfahrenden Arbeitsmaschine,
**dadurch gekennzeichnet,**
**dass** das Verfahren folgende Schritte umfasst:
a) Einleiten eines Antriebsmoments über eine Antriebswelle (16) und über ein Doppelplanetengetriebe (18) bestehen aus einem ersten antriebsseitigen Planetengetriebe (20) mit einem ersten Sonnenrad (24) und ersten Planetenrädern (26) und einem abtriebsseitigen Planetengetriebe (22) mit einem zweiten Sonnenrad (28) und zweiten Planetenrädern (30) auf eine Welle (44) eines Tandemachsenantriebs (32), wobei die ersten und zweiten Planetenräder (26, 30) über jeweils eine Planetenwelle (34) miteinander verbunden sind und die ersten Planetenräder (26) gegen einen ersten, mit dem Achsträger (12) verbundenen Zahnkranz (36) und die zweiten Planetenräder gegen einen zweiten, im Tandemkasten (14) angeordneten Zahnkranz (38) abgestützt sind; und
b) Betätigung einer Betätigungsvorrichtung (50) zum axialen Verschieben einer Schaltmuffe (40) von einer ersten Schaltstellung (EIN) in eine zweite Schaltstellung (AUS) oder umgekehrt, wobei die Schaltmuffe (40) auf der Antriebswelle (16) oder der Welle (44) axial verschiebbar ausgebildet ist, derart, dass die Schaltmuffe (40) in einer ersten Schaltstellung (EIN) der Antriebsvorrichtung (10) mit dem ersten oder dem zweiten Sonnenrad (26, 28) verbunden ist und in einer zweiten Schaltstellung (AUS) von dem ersten oder zweiten Sonnenrad (26, 28) gelöst ist und mit der Welle (44) oder der Antriebswelle (16) in Wirkverbindung steht.

15. Verfahren nach Anspruch 14,
**dadurch gekennzeichnet,**
**dass** zur Durchführung des Verfahrens eine Antriebsvorrichtung (10) eines Fahrzeuges oder einer selbstfahrenden Arbeitsmaschine nach einem Ansprüche 1 bis 12 verwendet wird.
